Europäisches Patentamt

European Patent Office

Office européen des brevets

(19)

(11) Veröffentlichungsnummer : **0 418 249 B1**

(12) # EUROPÄISCHE PATENTSCHRIFT

(45) Veröffentlichungstag der Patentschrift :
28.10.92 Patentblatt 92/44

(51) Int. Cl.⁵ : **G11B 5/31**

(21) Anmeldenummer : 89903685.9

(22) Anmeldetag : 29.03.89

(86) Internationale Anmeldenummer :
PCT/DE89/00195

(87) Internationale Veröffentlichungsnummer :
WO 89/12294 14.12.89 Gazette 89/29

(54) DÜNNFILM-MAGNETKOPF MIT HOHER NEBENSPURDÄMPFUNG.

(30) Priorität : 30.05.88 DE 3818393

(43) Veröffentlichungstag der Anmeldung :
27.03.91 Patentblatt 91/13

(45) Bekanntmachung des Hinweises auf die
Patenterteilung :
28.10.92 Patentblatt 92/44

(84) Benannte Vertragsstaaten :
DE FR GB

(56) Entgegenhaltungen :
EP-A- 0 124 293

(56) Entgegenhaltungen :
PATENT ABSTRACTS OF JAPAN, Band 10, Nr.
387, P530, Zussamenfassung von JP 61-175
918, publ. 1986-08-07 SEIKO EPSON CORP,-
siehe Figur
PATENT ABSTRACTS OF JAPAN, Band 11, Nr.
9, P534, Zusammenfassung von JP 61-184 711,
publ. 1986-08-18 FUJITSU LTD, siehe Figur

(73) Patentinhaber : SIEMENS
AKTIENGESELLSCHAFT
Wittelsbacherplatz 2
W-8000 München 2 (DE)

(72) Erfinder : SCHOLZ, Christian
Engertstrasse 6
W-8035 Stockdorf (DE)
Erfinder : SCHULZ, Gerd
Am Pulverl 20
W-8070 Ingolstadt (DE)

EP 0 418 249 B1

**Beschreibung**

Die Erfindung bezieht sich auf einen Dünnfilm-Magnetkopf gemäß dem Oberbegriff des Hauptanspruches.

Derartige Dünnfilm-Magnetköpfe sind aus JP-A-61-175918 bzw. DP-A-61-184711 bekannt und werden insbesondere bei Magnetschichtspeichern mit Relativbewegung, vorzugsweise bei Magnetplattenspeichern eingesetzt. Dünnfilm-Magnetköpfe haben vielfach konventionelle Ferritmagnetköpfe verdrängt, denn mit Ferritmagnetköpfen waren die angestrebten hohen Speicherdichten bei gleichzeitig hohen Datenübertragungsraten nicht mehr zu erreichen. Ausführungsformen von Dünnfilm-Magnetköpfen sind z. B. aus EP-A-0 012 910 oder auch EP-A-0 131 716 bekannt.

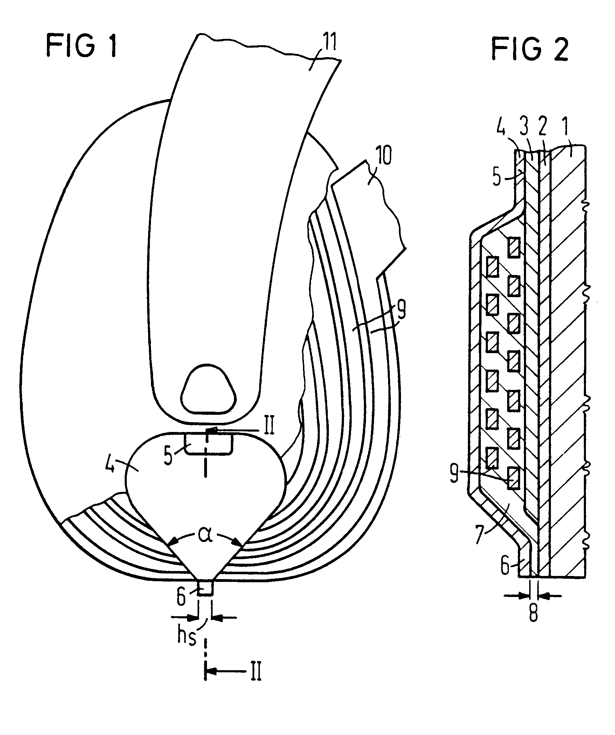

Die prinzipielle Struktur derartiger bekannter Dünnfilm-Magnetköpfe ist in den FIG 1 und 2 in einer Ansicht von oben bzw. in einem vergrößerten Querschnitt dargestellt. Auf einem nichtmagnetischen Substrat 1 ist eine magnetische Grundschicht 2 angeordnet, die in der Fachterminologie häu-fig als P1-Schicht bezeichnet wird. Die magnetische Grundschicht 2 wird häufig durch eine zusätzliche Magnetschicht 3 verstärkt, die üblicherweise als P2-Schicht bezeichnet wird. In einem vorbestimmten Abstand liegt über der Verstärkungsschicht 3 eine magnetische Deckschicht 4, die sogenannte P3-Schicht. Auch sie ist häufig durch eine darüberliegende magnetische Schicht, die sogenannte P4-Schicht verstärkt, die aber in FIG 2 nicht mehr dargestellt ist. Die Grundschicht 2 bildet zusammen mit der Verstärkungsschicht 3 eine der Kernhälften des Dünnfilm-Magnetkopfes, die Deckschicht 4 bildet die zweite Kernhälfte. Beide Kernhälften sind in FIG 1 an ihrem oberen Ende in einem Kontaktbereich 5 miteinander kontaktiert, während sie im Bereich zwischen der Magnetschicht 3 und der Deckschicht 4 durch eine nichtmagnetische Zwischenschicht 7 voneinander getrennt sind, die im Bereich einer Polzunge 6 den Magnetspalt 8 bildet.

In die Zwischenschicht 7 ist die Magnetspule eingebettet, die hier aus zwei Lagen von spiralförmig angeordneten Spulenwindungen 9 gebildet ist. Aus Gründen der Übersichtlichkeit ist in FIG.1 und 2 die Zahl der Spulenwindungen 9 gegenüber tatsächlichen Ausführungsformen bei Dünnfilm-Magnetköpfen reduziert, auch ist aus demselben Grund der Verbindungskontakt zwischen den beiden Spulenlagen nicht dargestellt. Dagegen verdeutlicht FIG 1 Kontaktfahnen 10 und 11 für die elektrischen Verbindungen für die äußerste bzw. innerste der Spulenwindungen 9 zum Anschluß des Dünnfilm-Magnetkopfes an eine hier nicht mehr dargestellte Schreib/ Leseelektronik.

Die Leistungsfähigkeit von Dünnfilm-Magnetköpfen hängt unter anderem ab von der Geometrie der Kernhälften, d. h. der Grundschicht 2 und der Deckschicht 4, der Breite des Magnetspaltes 8 und den magnetischen Eigenschafte, des die Kernhälften bildenden Materiales. Die Spaltbreite ergibt sich als ein Kompromiß zwischen einander entgegenstehenden Anforderungen. Eine gute Übertragungscharakteristik bei hohen Frequenzen erfordert einen schmalen Magnetspalt 8, während ein breiter Spalt die Erzeugung eines ausreichend starken Magnetfeldes begünstigt. Die hohen linearen Aufzeichnungsdichten, d. h. Flußwechseldichten bei heute üblichen Magnetplattenspeichern erfordern aber Spaltbreiten von weniger als 1 μm. Derartige Spaltbreiten lassen sich mit den herkömmlichen Ferritmagnetköpfen technologisch kaum realisieren, in der Technologie der Dünnfilm-Magnetköpfe ist jedoch eine derartige Spaltgeometrie reproduzierbar zu realisieren.

Zwei Einflußgrößen erschweren aber den Einsatz von Dünnfilm-Magnetköpfen, das ist ein ungünstiger Nutz-Störabstand und außerdem die geringe Wiedergabespannung. Die Wiedergabespannung bei Dünnfilm-Magnetköpfen ist begrenzt, da die Anzahl der Windungen der Magnetspule technologisch bedingt beschränkt ist. Außerdem lassen sich in dieser Technologie auch nur sehr dünne magnetische Kernschichten realisieren, so daß für den magnetischen Fluß relativ hohe magnetische Kernwiderstände auftreten. Eine Wiedergabespannung $U_w$ eines Dünnfilm-Magnetkopfes ist proportional der Anzahl w der Spulenwindungen, multipliziert mit einem Faktor, der den magnetischen Kernschichtwiderstand $R_F$ und den magnetischen Spaltwiderstand $R_S$ berücksichtigt, was sich in der Proportionalitäts-Beziehung (1) ausdrücken läßt:

$$(1) \qquad U_w \sim w \cdot \frac{1}{1 + \dfrac{R_F}{R_S}}$$

Aus dieser Beziehung ergibt sich, daß eine hohe Wiedergabespannung $U_w$ mit einer großen Anzähl w der Spulenwindungen 9, aber auch durch einen niedrigen Kernwiderstand $R_F$ erreichen läßt. Bei einer begrenzten Anzahl w der Spulenwindungen 9 versucht man genauer gesagt das Verhältnis des Kernwiderstandes $R_F$ zum Spaltwiderstand $R_S$ möglichst klein zu halten, vorzugsweise gegen Null gehen zu lassen, wobei hier die Größe für den magnetischen Spaltwiderstand $R_S$ die Gesamtheit aller Streuwiderstände zwischen den an der Polzunge 6 eng beieinander liegenden magnetischen Schichten 2 bzw. 4 umfassen soll.

Die Breite der Polzunge wird üblicherweise als Systemhöhe $h_s$ bezeichnet, sie entspricht etwa der Spurbreite auf dem zugeordneten mägnetischen Aufzeichnüngsträger und ist damit bei Magnetplattenspeichern durch die zu erreichende Spurdichte (TPI = tracks per inch) geometrisch festgelegt. Um nun einen möglichst geringen Kernwiderstand $R_F$ in der magnetischen Grundschicht 2 und der magnetischen Deckschicht 4 zu erzielen, wurde für diese Schichten die sogenannte Herzform entwickelt, bei der sich die Schicht, wie FIG 1 zeigt, ausgehend von der Systemhöhe $h_s$ im Bereich der Polzunge 6 nach hinten öffnet. Auch hier ist der Öffnungswinkel $\alpha$ wiederum ein Kompromiß. Mit steigendem Öffnungswinkel $\alpha$ verringert sich der Kernwiderstand $R_F$, so daß aus diesem Grunde der Öffnungswinkel $\alpha$ möglichst groß gewählt wurde. Mit wachsendem Öffnungswinkel $\alpha$ allerdings erniedrigt sich das Nebenspurdämpfungsmaß, mit anderen Worten der nutz/ Störabstand des Dünnfilm-Magnetkopfes wird verschlechtert. Materialeigenschaften, wie beispielsweise die Permeabilität des Kernmaterials beeinflußen selbstverständlich auch den Kernwiderstand $R_F$. Sie wurden in vorstehenden Betrachtungen jedoch ausgespart, da im Rahmen der vorliegender Erfindung vor allem die geometrischen Aspekte im Strukturaufbau von Dünnfilm-Magnetköpfen die ausschlaggebende Rolle spielen, d. h. eine Betrachtung der Schichten bei vorgegebener Permeabilität.

Ausgehend von der geschilderten Problematik beim Entwurf der Geometrie von Dünnfilm-Magnetköpfen liegt der Erfindung die Aufgrabe zugrunde, einer. Dünnfilm-Magnetkopf mit einer geometrischen Struktur, insbesondere der magnetischen Kernhälften zu schaffen, aufgrund deren es möglich ist, die Wiedergabespannung bei einem hohen Nebenspurdämpfungsmaß zu optimieren. Insbesondere soll unter Beibehaltung optimal gefundener Öffnungswinkel $\alpha$ der Abstand der Nutzspannung zur Störspannung durch den Einfluß der Nebenspur erhöht werden.

Bei einem Dünnfilm-Magnetkopf der eingangs genannten Art wird diese Aufgabe erfindungsgemäß dadurch gelöst durch die im Kennzeichen des Patenstanspruchs 1 beschriebenen Merkmale. Bei vielen konventionellen Dünnfilm-Magnetköpfen setzt die sich verbreiternde Umrißlinie der Magnetkernhälften an der Polzunge mit einem Winkel $(90° - \frac{\alpha}{2})$ an. Gerade dieser Übergangsbereich von der schlanken Polzunge in die verbreiterte Herzform der Magnetkernhälften ist in bezug auf das Nebenspurdämpfungsmaß besonders kritisch. Denn dort ist der Abstand der Umryißlinien der Magnetkernhälften von dem magnetischen Aufzeichnungsträger, insbesondere einer Magnetspeicherplatte am geringsten und in die Kernhälften werden diesem Abstand proportionale Störspannungen induziert. Ein sprungstellenfreier, d. h. allmählicher Übergang von der Polzunge in die verbreiterte Herzform erbringt ein wesentlich erhöhtes Nebenspurdämpfungsmaß auch bei einem großen Öffnungswinkel, so daß insgesamt von der Geometrie her gesehen, der erwünschte geringe Kernwiderstand zu realisieren ist, ohne dabei das Nebenspurdämpfungsmaß in unzulässiger Weise zu verringern.

Weiterhin ist es bekannt, daß alle Kanten und Ecken an einem Magnetjoch eines Magnetkopfes Nichtlinearitäten in der Verteilung des Magnetfeldes verursachen oder anders ausgedrückt Streufelder hervorrufen, die ihrerseits zu Störungen führen. Der erfindungsgemäßen sprungstellenfreie Übergang eliminiert diesen Störungseinfluß.

Schließlich hat diese geometrische Ausgestaltung der Umrißlinie der Magnetkernhälften auch einen fertigungstechnischen Vorteil. Die Polhöhe, bis zu der die Polzunge eine gleichbleibende Breite aufweist, soll zur Empfindlichkeitssteigerung des Magnetkopfes möglichst gering sein. Außerdem soll den Kopfspiegel, das ist die dem magnetischen Aufzeichnungsträger zugewandte Endfläche der Polzunge, eine möglichst geringe Rauhtiefe aufweisen. Der Kopfspiegel wird daher im Laufe der Fertigstellung des Dünnfilm-Magnetkopfes mechanisch bearbeitet. Wird bei dieser mechanischen Bearbeitung das Sollmaß für die Polhöhe unterschritten, so besteht bei konventionellen Dünnfilm-Magnetköpfen mit einer unter einem vorgegebenen Winkel an die Polzunge angesetzten Verbreiterung der Kernhälftenflächen die Gefahr einer unzulässigen Verbreiterung der Polzunge. Bei der erfindungsgemäßen Lösung verändert sich dagegen die Breite der Polzunge auch bei einer mechanischen Bearbeitung über das Sollmaß hinaus zunächst nur unwesentlich. Dieser kritische Fertigungsschritt ist daher wegen der geringeren Toleranzempfindlichkeit einfacher auszuführen.

Ein Ausführungsbeispiel der Erfindung wird im folgenden anhand der weiteren FIG der Zeichnung erläutert. Dabei zeigt:

FIG 3 schematisch eine Draufsicht auf eine erfindungsgemäß ausgebildete Magnetkernhälfte,

FIG 4 einen dazugehörigen Querschnitt durch den Magnetkopf im Bereich der Magnetkernhälfte von FIG 3,

FIG 5 in einer vergrößerten Darstellung eine Prinzipskizze der Geometrie der Magnetkernhälfte von FIG 3 mit der Polzunge und dem anschließenden Übergangsbereich zur herzförmigen Verbreiterung,

FIG 6, 7 und 8 in vergrößerten Darstellungen Prinzipskizzen der Geometrie der Magnetkernhälfte von FIG 3 mit der Polzunge und dem anschließenden Übergangsbereich zur herzförmigen Verbreiterung bei unterschledlichen Öffnungswinkeln $\alpha 1 < \alpha 2 < \alpha 3$.

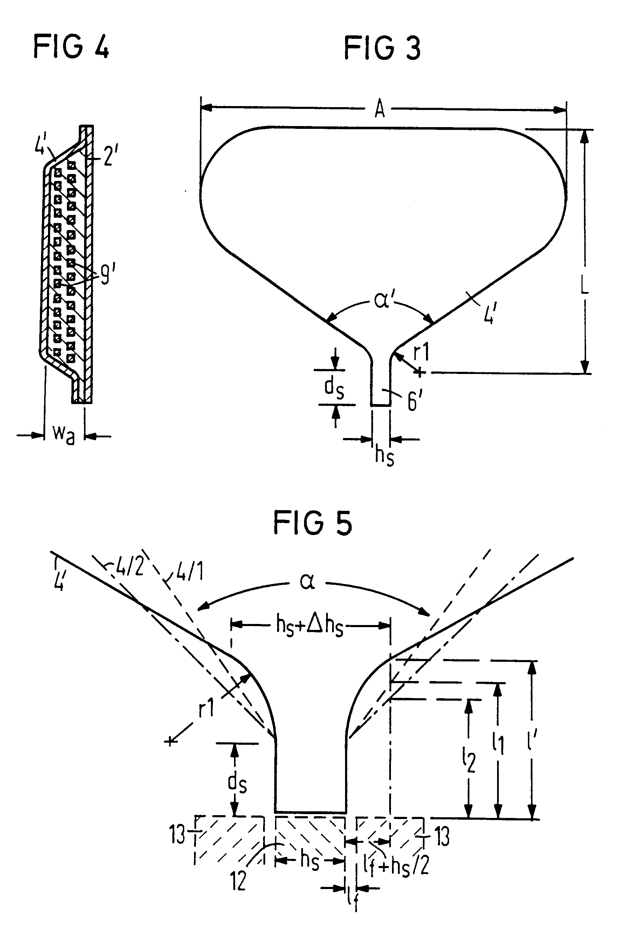

Nach der vorstehend ausgeführten ausführlichen Darstellung der Struktur bekannter Dünnfilm-Magnetköpfe kann sich die nachfolgende Beschreibung eines Ausführungsbeispiels der Erfindung auf die wesentlichen Merkmale der Erfindung und ihre funktionelle Bedeutung beschränken. Die Prinzipskizze von FIG 3 ist in diesem Sinn mit der beschriebenen Ansicht eines Magnetkopfes gemäß FIG 1 vergleichbar. Die Darstellung von FIG 3 beschränkt sich daher zur Verdeutlichung der erfindungsgemäßen Lösung auf die Darstellung der Umrißlinie einer Magnetkernhälfte 4', die der Darstellung der Deckschicht 4 gemäß FIG 1 entspricht. Beide Magnetkernhälften weisen eine Polzunge 6 bzw. 6' auf, die sich im oberen Bereich zu der bekannten herzförmigen Umrißlinie verbreitert.

Deutlich unterschiedlich sind aber die jeweiligen Öffnungswinkel $\alpha$ bzw. $\alpha'$, wobei $\alpha < \alpha'$ ist.

Diese Randbedingung führt zu einer gedrungeren Ausgestaltung der Ausführungsform der Magnetkernhälfte 4', d. h. das Verhältnis einer Breite A, gemessen über die maximale Breite der Umrißlinie, zu einer Länge L, gemessen von einer Polhöhe im Abstand $d_s$ vom Kopfspiegel, bis zum oberen Rand der Umrißlinie der Magnetkernhälfte 4', ist bei der Magnetkernhälfte 4' gemäß FIG 3 wesentlich höher als bei dem anhand von FIG 1 beschriebenen Dünnfilm-Magnetkopf. Dies ist ohne nachteilige Auswirkungen auf das Nebenspurdämpfungsmaß möglich, weil der Übergang der schmalen Seitenkanten der Magnetkernhälfte 4' vom Bereich der Polzunge 6' in die herzförmige Verbreiterung im Gegensatz zu der Ausführung beim bekannten Dünnfilm-Magnetkopf stetig verläuft. Die Umrißlinie bildet in diesem Bereich vorzugsweise einen Kreisabschnitt mit einem Radius r1. Dieser Radius soll mindestens den 1,5-fachen Wert der Systemhöhe $h_s$ betragen.

In FIG 4 ist schematisch ein Querschnitt durch einen Dünnfilm-Magnetkopf dargestellt. Diese Schnittdarstellung entspricht der Darstellung von FIG 2 mit der Ausnahme, daß das Substrat 1 nicht angedeutet ist und auch keine Verstärkungsschichten (P2- bzw. P4-Schichten) eingezeichnet sind. Zwischen der Grundschicht 2' und der Deckschicht 4' ist wieder die Magnetspule mit den Spulenwindungen 9' dargestellt. In diesem Zusammenhang sei darauf verwiesen, daß im Gegensatz zu der Darstellung von FIG 2 in FIG 4 eine mit den heutigen technologischen Möglichkeiten realisierbare Anzahl von Windungen 9' der Magnetspule eines Dünnfilm-Magnetkopfes dargestellt ist. Ein für die Empfindlichkeit eines Dünnfilm-Magnetkopfes wesentlicher Parameter ist der Abstand $w_a$ zwischen der Grundschicht 2' und der Deckschicht 4'. Eine gegenüber bekannten Dünnfilm-Magnetköpfen verbesserte Empfindlichkeit kann dadurch erreicht werden, daß dieser Abstand $w_a$ größer als der 13-fache Wert des Breiten/ Längenverhältnisses A : L gewählt wird.

Um nun den Einfluß und die Auswirkung der geometrischen Ausgestaltung der Umrißlinie der Magnetkernhälfte 4' gegenüber bekannten Lösungen näher zu erläutern, ist in FIG 5 ein gegenüber FIG 3 vergrößerter Ausschnitt der Polzunge 6' und des anschließenden Übergangsbereiches in ausgezogenen Linien dargestellt. Zur Erläuterung der funktionalen Zusammenhänge ist unmittelbar unter der Polzunge 6' mit der Systemhöhe $h_s$ eine Datenspur eines magnetischen Aufzeichnungsträgers, insbesondere einer Magnetspeicherplatte durch einen schraffierten Bereich schematisch angedeutet. Da diese Spur geometrisch unmittelbar der Polzunge 6' zugeordnet ist und damit bei einem Lesevorgang aufgrund der aufgezeichneten Information die Nutzspannung im Dünnfilm-Magnetkopf erzeugt, wird sie als Hauptspur 12 bezeichnet. Benachbarte Datenspuren, als Nebenspuren 13 bezeichnet, liegen mit einer Trennspurbreite $1_f$ zu beiden Seiten dieser Hauptspur 12. Beim Wiedergabevorgang wird durch das den Nebenspuren 13 zugeordnete Magnetfeld im Dünnfilm-Magnetkopf eine Störspannung induziert. Die Amplitude dieser Störspannung ist unmittelbar proportional dem Abstand einer der Nebenspuren 13 von der Polzunge 6'.

Um die Auswirkungen dieser systembedingten Eigenschaften geometrisch zu illustrieren, sind in FIG 5 neben der ausgezogenen Umrißlinie der vorliegenden Ausführungsform einer Magnetkernhälfte 4' in unterbrochenen bzw. strichpunktierten Linien entsprechende Umrißlinien 4/1 bzw. 4/2 von Ausführungsformen bekannter Dünnfilm-Magnetköpfe eingezeichnet. Die Öffnungswinkel $\alpha$ der Umrißlinien 4/1 bzw. 4/2 von Magnetkernhälften bekannter Dünnfilm-Magnetköpfe betragen etwa 75° bzw. 90° und sind bei weitem kleiner als bei der vorliegenden Ausführungsform. Die Mitte einer der Nebenspuren 13 liegt im Abstand $(1_f + h_s/2)$ von der zugewandten Seitenkante der Polzunge 6'. Der vertikale Abstand der Umrißlinien der Magnetkernhälften 4', 4/1 und 4/2 von der Mitte der Nebenspur 13 ist in FIG 5 mit 1', $1_1$ bzw. $1_2$ bezeichnet.

Die strichpunktierte Umrißlinie der Magnetkernhälfte 4/2 illustriert ein Beispiel für die ersten Ausführungsformen von Dünnfilm-magnetköpfen mit einem Öffnungswinkel $\alpha$ von ca. 90°. Ersichtlich haben hier die Kanten der Magnetkernhälften in dem kritischen Übergangsbereich zwischen der schmalen Polzunge 6' und der verbreiterten Herzform der Magnetkernhälfte den geringsten Abstand $1_2$ von den Nebenspuren 13. Um das Nebenspurdämpfungsmaß zu verbessern, wurde daher unter Inkaufnahme einer Erhöhung des Kernwiderstandes $R_F$ der Öffnungswinkel $\alpha$ bei späteren Ausführungsformen verkleinert, wie die Umrißlinie der gestrichelt gezeichneten Magnetkernhälfte 4/1 zeigt. Durch den vergrößerten Kantenabstand, d. h. $1_1 > 1_2$ wurde dieses Ziel zu Lasten des magnetischen Kernwiderstandes erreicht, da die von der Nebenspur 13 induzierte Störspannung proportional zu einem Kantenabstand 1 mit der Exponentialfunktion $\exp(-2\pi 1/\lambda)$ abnimmt.

Bei den hier vorgeschlagenen Ausführungsform für die Umrißlinie einer Magnetkernhälfte 4' verläuft dagegen der Übergang von der Polhöhe mit dem Abstand $d_s$ vom Kopfspiegel der Polzunge 6' zu der linearen Verbreiterung längs eines Kreisabschnittes mit dem Radius r, d. h. stetig ohne die Sprungstelle an der Polhöhe der bekannten Ausführungsformen.

Bezogen auf den gleichen seitlichen Abstand, d. h. die Mitte der Nebenspur 13, beträgt nun der Kantenabstand $1'$, wobei $1' > 1_1 > 1_2$ ist. D. h. in diesem kritischen Übergangsbereich ist die vorgeschlagene Ausführungsform für eine Umrißlinie von der Magnetkernhälfte $4'$ den herkömmlichen Ausführungsformen in bezug auf das Nebenspurdämpfungsmaß überlegen, zugleich aber - und das ist weiterhin wesentlich - kann ohne Nachteile der Öffnungswinkel $\alpha'$ gegenüber den bekannten Ausführungsformen erhöht werden. Wie einleitend ausgeführt, ist dies die Voraussetzung für einen gegenüber den bekannten Ausführungsformen verringerten Kernwiderstand $R_F$.

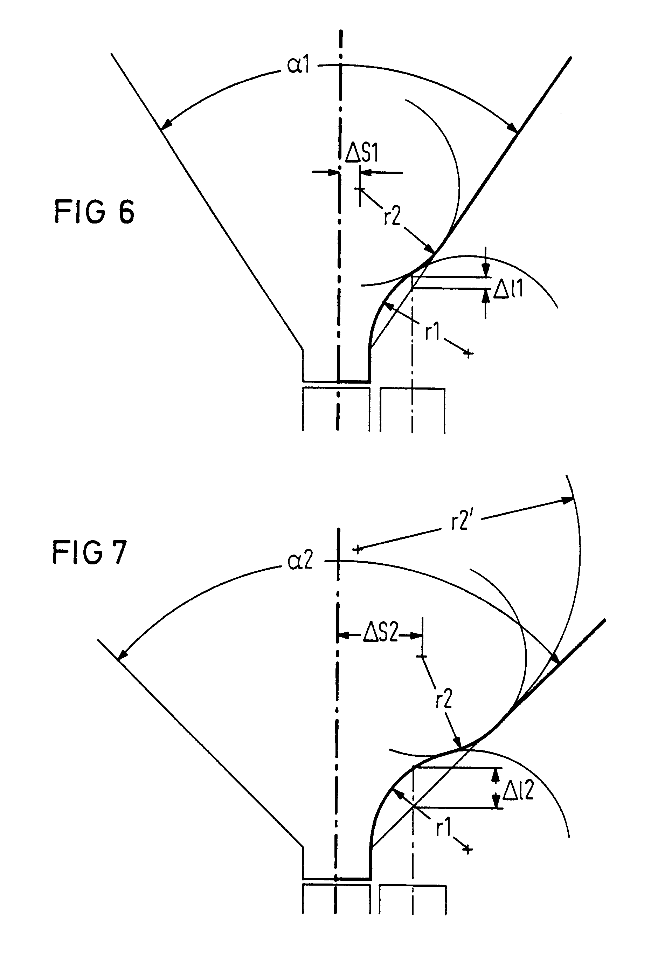

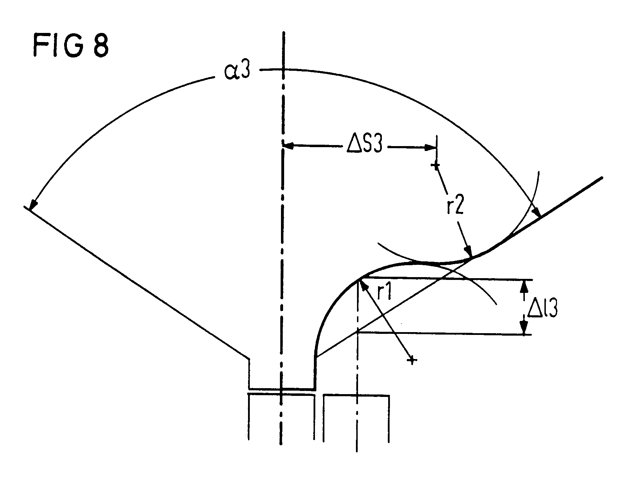

Die Auswirkungen der Anwendung der beschriebenen Ausführungsform auf Strukturen mit unterschiedlichen, fest vorgegebenen Öffnungswinkeln $\alpha 1 < \alpha 2 < \alpha 3$ ist in den FIG 6, 7 und 8 illustriert. Dabei weisen die Umrißlinien zur Vermeidung kantiger Übergänge einen zweiten Radius r2 auf, der mit größerem Öffnungswinkel auch in größerem Abstand $\Delta s1 < \Delta s2 < \Delta s3$ von der Mittellinie angesetzt wird. Der Vorteil eines verbesserten Nebenspurdämpfungsmaßes gegenüber der konventionellen Kernform mit geradlinig ausgeführter Umrißlinie wird mit $\Delta 11 < \Delta 12 < \Delta 13$ desto augenfälliger, je größer der Öffnungswintel $\alpha$ vorgegeben wird. Dabei gibt es zwei Möglichkeiten den Ausführung eines zweiten Radius r2. Man kann $r2 \leq r2$ oder $r2 > r1$ wählen. In FIG 6 und 8 ist insbesondere $r2 = r1$ gewählt.

FIG 7 zeigt den mit wachsendem zweiten Radius $r2' > r2$ flacher verlaufenden Übergang und damit eine Lösung, die bei großem Öffnungswinkel $\alpha$ vorzuziehen ist.

Die erläuterten schematischen Darstellungen von Magnetkernhälften, insbesondere auch FIG 5 verdeutlichen weiterhin einen fertigungstechnischen Vorteil: Zur Steigerung der Empfindlichkeit eines Dünnfilm-Magnetkopfes wird die Polhöhe mit dem Abstand $d_s$ vom Kopfspiegel der Polzunge $6'$ möglichst niedrig gewählt. Zur Verdeutlichung sei erwähnt, daß die Polhöhe von realisierten Dünnfilm-Magnetköpfen etwa 0,5 µm beträgt. Im Laufe des Herstellungsprozesses wird zur Einstellung dieser Polhöhe und zur Verringerung der Rauhigkelt des Kopfspiegels an der Polzunge $6'$ der Kopfspiegel mechanisch bearbeitet. Bei dieser mechanischen Bearbeitung besteht die Gefahr einer Verbreiterung der Polzunge, in FIG 5 angedeutet durch $h_s + \Delta h_s$, wenn durch fehlerhafte Bearbeitung das Sollmaß für die Polhöhe unterschritten wird. Bei der vorgeschlagenen Ausgestaltung der Umrißlinie einer Magnetkernhälfte $4'$ in dem kritischen Bereich oberhalb der Polhöhe verbreitert sich die Polzunge Im Gegensatz zu den Ausführungsformen bei herkömmlichen Dünnfilm-Magnetköpfen zunächst nur unwesentlich, so daß hier eine mechanische Bearbeitung des Kopfspiegels toleranzunempfindlicher ist.

Weiterhin ist auf die bekannte Tatsache hinzuweisen, daß bei Magnetköpfen an allen Unstetigkeitsstellen, d. h. an Kanten und Ecken von Kernpaketen magnetische Streufelder auftreten, die zusätzliche Störungen verursachen. Der stetige Übergang der vorgeschlagenen Ausführungsform für eine Magnetkernhälfte $4'$ zwischen der Polzunge $6'$ und der verbreiterten Herzform in FIG 5 sowie der dick ausgezogenen Linie in FIG 6 bis 8 mit Hilfe von zwei Radien r1 und r2 eliminiert derartige Störungen.

Unter diesen Randbedingungen kann die Systemhöhe $h_s$ eines Dünnfilm-Magnetkopfes bei mindestens gleicher Empfindlichkeit verringert werden bzw. können die aufgezeichneten Spuren enger aneinander gesetzt werden unter Verringerung der Trennspurbreite $1_f$. Wie aus einem Vergleich mit FIG 5 unmittelbar einzusehen ist, schafft dies die Voraussetzung für eine Steigerung der Flächenspeicherdichte bei magnetischen Datenspeichern, insbesondere Magnetplattenspeichern.

Bei der beschriebenen Ausführungsform für einen verbesserten Dünnfilm-Magnetkopf ist ein stetiger Übergang zwischen der Polzunge und der verbreiterten Herzform den Magnetkernhälften durch einen Kreisringabschnitt geschaffen, dessen Radius mindestens das 1,5-fache der Systemhöhe $h_s$ beträgt. Diese Ausführungsform stellt lediglich eine Sonderform dar, dem Fachmann ist unmittelbar einleuchtend, daß auch andere stetige Übergänge, beispielsweise mit einer parabolischen oder elliptischen Kurvenform denkbar sind und im Rahmen der Erfindung liegen. Die in FIG 3 dargestellte Ausführungsform für die Umrißlinie einer Magnetkernhälfte stellt daher lediglich eine aus Gründen der Übersichtlichkeit gewählte Sonderform dar, in der allgemeinsten Ausführungsform sind im übrigen geradlinige Umrißabschnitte keineswegs zwingend erforderlich, wie die Prinzipdarstellungen von FIG 6 bis 8 beispielhaft illustrieren.

**Patentansprüche**

1. Dünnfilm-Magnetkopf mit einem schichtweise aufgebauten magnetischen Leitkörper, bestehend aus Magnetkernhälften (2, $2'$ bzw. 4, $4'$), zugehörigen Polzungen (6, $6'$) und einer dazwischen angeordneten Magnetspule (9, $9'$), wobei der Leitkörper bei einer bis zu einer Polzungenhöhe ($d_s$) gleichbleibenden Breite (Systemhöhe $h_s$) mit weiter wachsendem Abstand von der Polzunge (6, $6'$) sich seitlich in einer herzförmigen Umrißlinie sprungstellenfrei mit vorgegebener Kernbreite (A) und Kernlänge (L) verbreitert, **dadurch gekennzeichnet,** daß die Umrißlinie des Übergangs der Magnetkernhälften ($4'$) in die Polzungen als stetige Kurve in Form eines Kreisabschnittes ausgestaltet ist, dessen Radius (r1) mindestens den eineinhalbfachen Wert der Systemhöhe ($h_s$) beträgt.

2. Dünnfilm-Magnetkopf nach Anspruch 1 **dadurch gekennzeichnet**, daß mit einem zweiten Kreisringabschnitt mit einem zweiten Radius (r2) der stetige Übergang von der Polzunge (6, 6') zu jedem fest vorgegebenen Öffnungswinkel ($\alpha$) gewährleistet wird.

3. Dünnfilm-Magnetkopf nach einem der Ansprüche 1 oder 2, **dadurch gekennzeichnet**, daß die der Polzunge (6') nächstliegende erste Windung (9) der Magnetspule von dem Kopfspiegel des Dünnfilm-Magnetkopfes in einem Abstand angeordnet ist, der der Summe von Polhöhe ($d_s$) und einer additiven Größe im Bereich von 1/3 bis 2/3 des Radius (r1) des ersten Kreisabschnittes der Umrißlinie der Magnetkernhälfte (4') liegt.

4. Dünnfilm-Magnetkopf nach einem der Ansprüche 2 oder 3, **dadurch gekennzeichnet**, daß der Abstand einer der die eine Kernhälfte des Leitkörpers bildenden Grundschicht (2') von einer die andere Kernhälfte bildenden Dechkschicht (4') in Mikrometern mindestens um eine Größenordnung größer ist als das Verhältnis der Kernbreite (A) zur Kernhöhe (L).

5. Dünnfilm-Magnetkopf nach Anspruch 4, **dadurch gekennzeichnet**, daß der Abstand der Grundschicht (2') zur Deckschicht (4') in Mikrometern mindestens das 13-fache des Verhältnisses von Kernbreite (A) zur kernhöhe (L) beträgt.

## Claims

1. Thin-film magnetic head having a magnetic conduction member constructed in layers, comprising magnetic core halves (2, 2' and 4, 4'), associated pole tongues (6, 6') and a magnetic coil (9, 9') arranged therebetween, in which arrangement the conduction member, given a width (system height $h_s$) remaining constant up to a pole tongue height ($d_s$), laterally broadens with increasing distance from the pole tongue (6, 6') in a heart-shaped contour line free of discontinuities with a predetermined core width (A) and core length (L), characterised in that the contour line of the transition of the magnetic core halves (4') into the pole tongues is fashioned as a steady curve in the form of a circular segment, the radius of which (r1) amounts to at least one and a half times the value of the system height ($h_s$).

2. Thin-film magnetic head according to Claim 1, characterised in that the steady transition from the pole tongue (6, 6') to each permanently predetermined aperture angle ($\alpha$) is ensured by a second annular segment having a second radius (r2).

3. Thin-film magnetic head according to one of Claims 1 or 2, characterised in that the first turn (9) of the magnetic coil lying closest to the pole tongue (6') is arranged at a distance from the head mirror of the thin-film magnetic head, which distance lies [lacuna] of the sum of pole height ($d_s$) and an additive quantity in the range from 1/3 to 2/3 of the radius (r1) of the first circular segment of the contour line of the magnetic core half (4').

4. Thin-film magnetic head according to one of Claims 2 or 3, characterised in that the distance of a base layer (2'), forming the one core half of the conduction member, from a cover layer (4'), forming the other core half, is at least one order of magnitude greater in micrometres than the ratio of the core width (A) to the core height (L).

5. Thin-film magnetic head according to Claim 4, characterised in that the distance of the base layer (2') from the cover layer (4') in micrometres amounts to at least 13 times the ratio of core width (A) to the core height (L).

## Revendications

1. Tête magnétique à couche mince comportant un corps conducteur magnétique constitué par des couches et formé par des moitiés (2,2' ou 4,4') de noyau magnétique, des languettes polaires associées (6,6') et une bobine magnétique (9,9') intercalée entre ces éléments, et dans laquelle le corps conducteur, qui possède une largeur (hauteur $h_s$ du système), qui est constante jusqu'à une hauteur ($d_s$) des languettes polaires, s'élargit latéralement, et sans discontinuité, selon une courbe de contour en forme de coeur, avec une largeur (A) et une longueur (L) de noyau prédéterminées, au fur et à mesure qu'on s'écarte de la languette polaire (6, 6'), caractérisée par le fait que la ligne de contour de la jonction entre les moitiés du noyau magnétique (4') et les languettes polaires est constituée par une courbe continue sous la forme d'une section de cercle, dont le rayon (r1) est égal au moins à une fois et demie la valeur de la hauteur ($h_s$) du système.

2. Tête magnétique à couche mince suivant la revendication 1, caractérisée par le fait que la jonction continue de la languette polaire (6,6') est à chaque angle d'ouverture ($\alpha$) prédéterminé de fa-

çon fixe, garantie au moyen d'une seconde section d'anneau circulaire possédant un second rayon (r2).

3.  Tête magnétique à couche mince suivant l'une des revendications 1 ou 2, caractérisée par le fait que la première spire (9), qui est la plus proche de la languette polaire (6'), de la bobine magnétique est disposée à une distance de la face de la tête magnétique à couche mince, qui correspond à la somme de la hauteur polaire ($d_s$) et d'une grandeur additionnelle comprise entre 1/3 et 2/3 du rayon (r) de la première section circulaire de la ligne de contour de la moitié (4') du noyau magnétique.

4.  Tête magnétique à couche mince suivant l'une des revendications 2 ou 3, caractérisée par le fait que la distance, en microns, entre une couche de base (2'), qui constitue une moitié du noyau du corps conducteur, et une couche de revêtement (4') constituant l'autre moitié du noyau, est supérieure, au moins d'un ordre de grandeur, au rapport de la largeur (A) à la hauteur (L) du noyau.

5.  Tête magnétique à couche mince suivant la revendication 4, caractérisée par le fait que la distance, en microns, entre la couche de base (2') et la couche de revêtement (4') est égale au moins à 13 fois le rapport de la largeur (A) à la hauteur (L) du noyau.

# FIG 1

# FIG 2

# FIG 4

# FIG 3

# FIG 5

FIG 6

α1

ΔS1

r2

Δl1

r1

FIG 7

r2'

α2

ΔS2

r2

Δl2

r1

FIG 8